# EUROPÄISCHE PATENTSCHRIFT

(11) **EP 1 092 498 B1**
(45) Veröffentlichungstag und Bekanntmachung des Hinweises auf die Patenterteilung: **09.04.2003**
(21) Anmeldenummer: 99120416.5
(22) Anmeldetag: 13.10.1999
(51) Int. Cl.: B23P 19/08, B23P 19/04

(54) **Vorrichtung und Verfahren zur Montage von biegeschlaffen Montageteilen**
Device and method for assembling limp assembly parts
Dispositif et procédé d' assemblage pour pièces de montage souples

(43) Veröffentlichungstag der Anmeldung: 18.04.2001
(73) Patentinhaber: Alusuisse Bayrisches Druckguss-Werk GmbH & Co. KG, 85570 Markt Schwaben (DE)
(72) Erfinder: Zitzmann, Adolf, 92552 Teunz (DE); Bongardt, Thomas, 80939 München (DE)
(74) Vertreter: Hofstetter, Alfons J., Dr.rer.nat.

(56) Entgegenhaltungen:
- DE-A- 4 328 900
- US-A- 5 062 194
- PATENT ABSTRACTS OF JAPAN vol. 1995, no. 09, 31. Oktober 1995 (1995-10-31) -& JP 07 156027 A (NISSAN MOTOR CO LTD), 20. Juni 1995 (1995-06-20)
- PATENT ABSTRACTS OF JAPAN vol. 1997, no. 11, 28. November 1997 (1997-11-28) -& JP 09 192950 A (NISSAN MOTOR CO LTD), 29. Juli 1997 (1997-07-29)
- SELIGER G ET AL: "INDUSTRIEROBOTERGEFUEHRTE MONTAGE FLAECHIGER NICHT FORMSTABILER FUEGEPARTNER" ZWF ZEITSCHRIFT FUR WIRTSCHAFTLICHE FERTIGUNG UND AUTOMATISIERUNG,DE,CARL HANSER VERLAG. MUNCHEN, Bd. 86, Nr. 1, 1. Januar 1991 (1991-01-01), Seiten 24-28, XP000179024 ISSN: 0947-0085

## Beschreibung

Die vorliegende Erfindung betrifft eine Vorrichtung und ein Verfahren zur Montage von biegeschlaffen Montageteilen, insbesondere zur Montage von formlabilen Dichtungen.

Nahezu 90 % aller biegeschlaffen Montageteile werden heutzutage noch manuell montiert. Insbesondere die zu hohe Komplexität sowie niedrige Verfügbarkeiten automatischer Lösungen sind hierfür verantwortlich.

Verschiedenartige Lösungsansätze zur Montage von biegeschlaffen Montageteilen sind aus dem Stand der Technik bekannt. So sind Verfahren bekannt, die das formlabile und biegeschlaffe Montageteil direkt dort erzeugen, wo es benötigt wird, nämlich an einem entsprechenden Bauteil. Als Beispiel hierfür kann zum Beispiel das direkte Anspritzen einer Dichtung in einer Spritzgußmaschine an ein entsprechendes Bauteil genannt werden. Allerdings ergeben sich aus der fehlenden Lösbarkeit der erzeugten Verbindung mehrere Probleme, so wird, im Falle eines Defektes, das gesamte Bauteil unbrauchbar und auch das Recycling wird schwieriger.

Des weiteren ist bekannt, daß gattungsgemäße biegeschlaffe Montageteile händisch, unter Zuhilfenahme von Masken, auf entsprechende Bauteile aufgetragen werden. Dieses Verfahren ist jedoch sehr zeitintensiv und daher kostenträchtig.

Auch wurde versucht, entsprechende Verstärkungen, entweder an den biegeschlaffen Montageteilen selbst, oder an den Bauteilen anzubringen, um eine genaue und schnelle Montage der Montageteile zu gewährleisten. Derartige Verstärkungen oder Versteifungen sind jedoch nur bei wenigen Montageteilen oder Bauteilen ohne größeren Aufwand anzubringen. Dieses Verfahren ist daher ebenfalls kostspielig und kann nur eingeschränkt Verwendung finden.

Es ist daher Aufgabe der vorliegenden Erfindung, eine Vorrichtung und ein Verfahren der eingangs genannten Art bereitzustellen, welche die genannten Nachteile überwinden und eine kostengünstige und automatisierte Montage von biegeschlaffen Montageteilen gewährleisten.

Diese Aufgabe wird gelöst durch eine Vorrichtung und ein Verfahren zur Montage von biegeschlaffen Montageteilen gemäß den Merkmalen der unabhängigen Ansprüche 1 und 19.

Vorteilhafte Ausgestaltungen der Erfindung sind in den jeweiligen Unteransprüchen beschrieben.

Eine erfindungsgemäße Vorrichtung zur Montage von biegeschlaffen Montageteilen weist ein Montagewerkzeug bestehend aus einem Stempel, einer Aufnahmevorrichtung zur Aufnahme eines oder mehrerer biegeschlaffer Montageteile und mindestens eine Montageplatte auf, wobei der Stempel mittels einer oberen Hubeinheit bewegt wird und Platten und/oder Bolzen aufweist, die ungefähr quer zum Verlauf der oder des biegeschlaffen Montageteils angeordnet sind und durch entsprechende Aussparungen in der Aufnahmevorrichtung greifen und das oder die biegeschlaffen Montageteile auf die Montageplatte drücken. Ein derart ausgestaltetes Montagewerkzeug gewährleistet, daß die biegeschlaffen Montageteile paßgenau und exakt auf die entsprechende Montageplatte positioniert werden können. Das biegeschlaffe Montageteil kann zuverlässig automatisiert in ein entsprechendes Werkstück gefügt werden. Durch die Automatisierung verringern sich die Herstellungskosten des Werkstücks insgesamt, es werden deutlich höhere Durchsatzzahlen erzielt.

In einer vorteilhaften Ausgestaltung der erfindungsgemäßen Vorrichtung weist der Stempel eine lösbare Haltevorrichtung für die Aufnahmevorrichtung auf. Die Haltevorrichtung kann dabei aus mindestens einem Magnetgreifer und/oder mindestens einem mechanischen Halteelement bestehen. Dadurch ist gewährleistet, daß das biegeschlaffe Montageteil bis zu einem Abheben der Aufnahmevorrichtung durch den Stempel niedergehalten wird. Erst wenn das Montageteil auf die Montageplatte gedrückt wurde, wird auch der Stempel mitgenommen. Es ist allerdings auch möglich, daß die erfindungsgemäße Vorrichtung ohne die genannte Niederhaltefunktion auskommt, wenn zum Beispiel ein entsprechendes Vakuum an die Montageplatte angelegt wird, das das biegeschlaffe Montageteil zuverlässig beim Abheben der Aufnahmevorrichtung an der Montageplatte hält.

In einer weiteren vorteilhaften Ausgestaltung der erfindungsgemäßen Vorrichtung sind eine oder mehrere Platten und/oder Bolzen des Stempels mit Abstandshaltern versehen. Dadurch wird ein vollständiges Aufliegen des Stempels auf der Montageplatte verhindert, so daß gewährleistet ist, daß das biegeschlaffe Montageteil zwischen Stempel und Montageplatte gequetscht und damit beschädigt werden kann.

In einer weiteren vorteilhaften Ausgestaltung der Erfindung sind die Platten und/oder Bolzen des Stempels lösbar an diesem befestigt. Durch die lösbare Befestigung der Platten und/oder Bolzen des Stempels ist eine leichte Austauschbarkeit dieser gegeben. Dadurch ist es möglich, ohne großen Aufwand den Stempel mit Platten und/oder Bolzen unterschiedlicher Geometrie auszustatten und somit an die unterschiedliche Geometrie bzw. unterschiedliche Konturen verschiedener biegeschlaffer Montageteile anzupassen.

In einer weiteren vorteilhaften Ausgestaltung der erfindungsgemäßen Vorrichtung gilt entsprechendes für die Aufnahmevorrichtung, die ebenfalls aus mehreren, lösbar befestigten Einzelelementen bestehen kann. Die Einzelelemente bestehen dabei mindestens aus einem Rahmen und mindestens einem Kern für die Innenkonturen der Aufnahmevorrichtung. Es ist aber auch denkbar, daß die Aufnahmevorrichtung einstückig ausgebildet ist.

In einer weiteren vorteilhaften Ausgestaltung der erfindungsgemäßen Vorrichtung bilden die Aufnahmevorrichtung oder die Einzelelemente der Aufnahmevorrichtung die Kontur des aufzunehmenden biegeschlaffen Montageteils nach und weisen entlang der Kontur trichterförmige Wände auf. Dabei kann der durch die Wände gebildete Trichter sich im Bereich einer Einführöffnung für das aufzunehmende biegeschlaffe Montageteil stärker verjüngen als im Bereich einer entsprechenden, die Kontur des biegeschlaffen Montageteils nachbildenden Auslaßöffnung. Dadurch ist gewährleistet, daß sowohl das Einlegen des biegeschlaffen Montageteils in die Aufnahmevorrichtung leicht erfolgen kann, und auch das Durchdrücken des Montageteils auf die Montageplatte exakt positioniert erfolgt.

In einer weiteren vorteilhaften Ausgestaltung der erfmdungsgemäßen Vorrichtung weist die Montageplatte mindestens eine Nut zur Aufnahme des biegeschlaffen Montageteils auf. Dabei ist es möglich, daß das biegeschlaffe Montageteil zusätzlich mittels eines Vakuums, das über Öffnungen in der Montageplatte wirkt, an dieser gehalten wird. Mit diesen Maßnahmen ist gewährleistet, daß einerseits das biegeschlaffe Montageteil exakt positioniert und andererseits an der Montageplatte festgehalten wird.

Eine weitere vorteilhafte Ausgestaltung der erfmdungsgemäßen Vorrichtung weist eine Montageplatte beziehungsweise Montageplatten auf, die eine Schwenk- und/oder Drehvorrichtung aufweisen. Die Schwenk- und/oder Drehvorrichtung bewegt das an der Montageplatte befestigte biegeschlaffe Montageteil in Richtung des mit dem Montageteil zu versehenden Werkstückes. Sind zwei Montageplatten vorhanden, die jeweils mit ihren Rückseiten aneinander befestigt sind oder zueinander zeigen, ermöglicht die Schwenkund/oder Drehvorrichtung, daß zeitgleich ein biegeschlaffes Montageteil auf der oberen Montageplatte abgelegt werden kann und ein bereits an der unteren Montageplatte befestigtes Montageteil mit dem Werkstück verbunden wird. Dadurch verkürzen sich die Betriebszeiten, so daß ein höherer Durchsatz möglich ist.

In einer weiteren vorteilhaften Ausgestaltung der erfindungsgemäßen Vorrichtung weist diese eine untere Hubeinheit zum Andrükken des Werkstückes an die Montageplatte auf. Dadurch ist gewährleistet, daß die Vorrichtung insgesamt relativ klein dimensioniert gehalten werden kann und verschiedenartigsten räumlichen Anforderungen angepaßt werden kann.

Bei weiteren vorteilhaften Ausgestaltungen der erfindungsgemäßen Vorrichtung ist das biegeschlaffe Montageteil mittels einer automatischen Einlegevorrichtung oder manuell in die Aufnahmevorrichtung einlegbar. Auch diese Maßnahme gewährleistet eine optimale Anpassung der erfindungsgemäßen Vorrichtung an die vorgegebenen technischen und örtlichen Gegebenheiten.

In einer weiteren vorteilhaften Ausgestaltung der erfindungsgemäßen Vorrichtung ist diese computergesteuert, wobei der Zustand der Vorrichtung mittels Sensoren überwacht werden kann. Dadurch ist gewährleistet, daß die erfindungsgemäße Vorrichtung vollautomatisch arbeiten kann, was zu einer erheblichen Reduzierung der Herstellungskosten des Werkzeuges führt.

Ein erfindungsgemäßes Verfahren zur Montage von biegeschlaffen Montageteilen, insbesondere zur Montage von formlabilen Dichtungen umfaßt folgende Schritte:
a) Manuelles oder automatisiertes Einlegen von mindestens einem biegeschlaffen Montageteil in eine Aufnahmevorrichtung;
b) Absenken eines Stempels in Richtung der Aufnahmevorrichtung, wobei Teile des Stempels durch Aussparungen in der Aufnahmevorrichtung hindurchgreifen und das biegeschlaffe Montageteil auf mindestens eine Montageplatte drücken;
c) Abheben des Stempels und der Aufnahmevorrichtung von der Montageplatte;
d) Drehen und/oder Schwenken der Montageplatte mit dem aufliegenden Montageteil in Richtung eines Werkstücks, welches mit dem Montageteil verbunden werden soll;
e) Gegenseitiges Andrücken des Werkstücks und der Montageplatte, wodurch das Montageteil auf dem Werkstück positioniert und befestigt wird;
f) Lösen von Werkstück und Montageplatte, wobei die Montageplatte in eine Position zur Aufnahme weiterer Montageteile zurückgefahren wird; und
g) Wiederholen der Verfahrensschritte a) bis f).

In einer weiteren vorteilhaften Ausgestaltung des erfindungsgemäßen Verfahrens erfolgt das Abheben des Stempels und der Aufnahmevorrichtung von der Montageplatte stufenweise. Dadurch ist gewährleistet, daß es nicht zu einer Quetschung des biegeschlaffen Montageteils kommt und dieses dadurch beschädigt wird. Hierzu dient auch das Abheben des Stempels zeitlich nach dem Abheben der Aufnahmevorrichtung. Die Aufnahmevorrichtung wird vorteilhafterweise dabei mittels einer lös- und betätigbaren Haltevorrichtung am Stempel gehalten.

In einer weiteren vorteilhaften Ausgestaltung des erfindungsgemäßen Verfahrens wird im Verfahrensschritt b) das biegeschlaffe Montageteil durch Absenken des Stempels in Richtung der Aufnahmevorrichtung direkt auf das Werkstück gedrückt. Bei dieser Ausgestaltung des erfmdungsgemäßen Verfahrens wird auf eine Montageplatte verzichtet, so daß höhere Produktions- und Durchsatzraten möglich werden.

Eine Verwendungsmöglichkeit der erfindungsgemäßen Vorrichtung und des erfmdungsgemäßen Verfahrens zur Montage von biegeschlaffen Montageteilen erfolgt im Bereich der Motorenherstellung.

Weitere Einzelheiten, Merkmale und Vorteile der Erfindung werden im folgenden anhand eines zeichnerisch dargestellten Ausführungsbeispieles dargestellt.

Es zeigen:
- Figur 1: eine schematische Darstellung der erfindungsgemäßen Vorrichtung zur Montage von biegeschlaffen Montageteilen;
- Figur 2: eine schematische Darstellung eines Stempels der erfmdungsgemäßen Vorrichtung;
- Figur 3: eine schematische Darstellung einer Aufnahmevorrichtung der erfindungsgemäßen Vorrichtung;
- Figur 4: eine schematische Darstellung der Aufnahmevorrichtung und einer Montageplatte der erfindungsgemäßen Vorrichtung; und
- Figur 5: eine schematische Darstellung des Montagewerkzeugs der erfindungsgemäßen Vorrichtung.

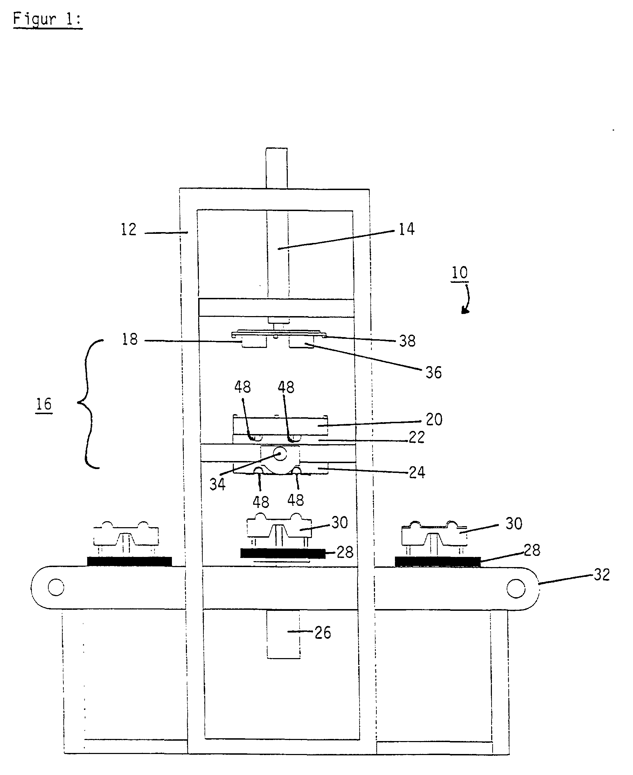

Figur 1 zeigt in einer schematischen Darstellung eine Vorrichtung 10 zur Montage von biegeschlaffen Montageteilen, insbesondere zur Montage von formlabilen Dichtungen. Die Vorrichtung 10 weist dabei ein Montagewerkzeug 16 bestehend aus einem Stempel 18, einer Aufnahmevorrichtung 20 zur Aufnahme eines oder mehrerer biegeschlaffer Montageteile (nicht dargestellt) und zwei Montageplatten 22, 24 auf. Der Stempel 18 wird mittels einer oberen Hubeinheit 14 bewegt, die an einer Rahmenkonstruktion 12 der Vorrichtung 10 befestigt ist.

Man erkennt weiterhin, daß der Stempel 18 Platten 36 und Bolzen 38 aufweist, die ungefähr quer zum Verlauf des biegeschlaffen Montageteils angeordnet sind. Des weiteren erkennt man, daß die Montageplatten 22, 24 an ihren Oberseiten jeweils eine Nut 48 zur Aufnahme des biegeschlaffen Montageteils aufweisen. Die jeweiligen Unterseiten der Montageplatten 22, 24 zeigen zueinander, wobei in dem Ausführungsbeispiel die Montageplatten 22, 24 über eine Schwenk- und Drehvorrichtung 34 miteinander verbunden sind. Das biegeschlaffe Montageteil wird dabei mittels eines Vakuums, das über Öffnungen (nicht dargestellt) in den Montageplatten 22, 24 wirkt, an diesen gehalten.

Die Vorrichtung 10 weist weiterhin eine untere Hubeinheit 26 zum Andrücken der Werkstücke 30 an die entsprechenden Montageplatten 22, 24 auf. Die Werkstücke sind dabei auf einer Palettenvorrichtung gelagert, die über ein Förderband 32 transportierbar ist. Des weiteren ist es denkbar, daß das biegeschlaffe Montageteil mittels einer automatischen Einlegevorrichtung (nicht dargestellt) in die Aufnahmevorrichtung 20 eingelegt wird.

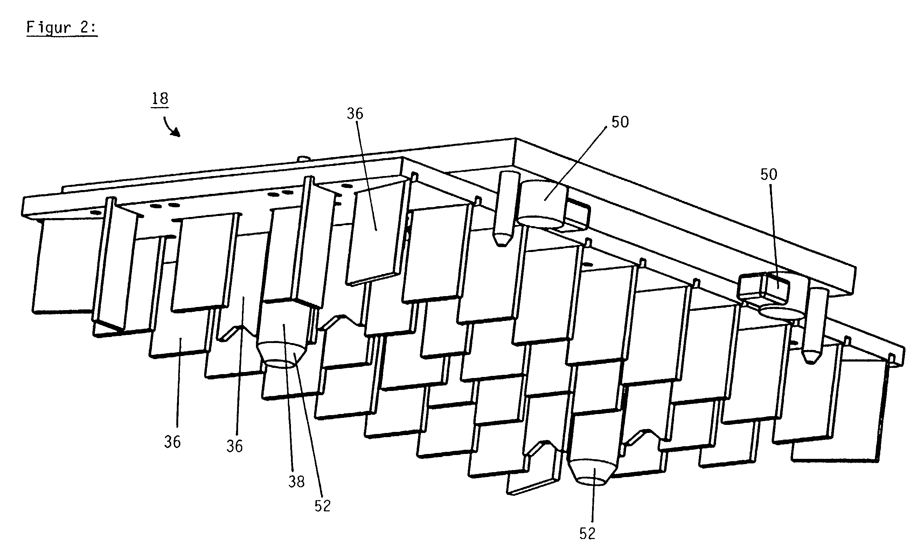

Figur 2 zeigt eine schematische Darstellung des Stempels 18. Man erkennt die Platten 36 und die Bolzen 38. Des weiteren erkennt man, daß die Platten 36 lösbar an dem Stempel 18 befestigt sind. Dadurch ist es möglich, durch Variation der Geometrien der einzelnen Platten 36 unterschiedlichste Konturen der biegeschlaffen Montageteile nachzubilden. Des weiteren erkennt man, daß der Stempel 18 eine lösbare Haltevorrichtung 50 für die Aufnahmevorrichtung 20 aufweist. Die Haltevorrichtung 50 besteht dabei aus mehreren Magnetgreifern. Es ist jedoch auch denkbar, anstelle der Magnetgreifer, ein mechanisches Halteelement anzubringen.

Des weiteren erkennt man, daß die Bolzen 38 des Stempels 18 mit Abstandshaltern 52 versehen sind, um eine Beschädigung des biegeschlaffen Montageteils durch eine übermäßige Druckbelastung durch den Stempel 18 zu vermeiden.

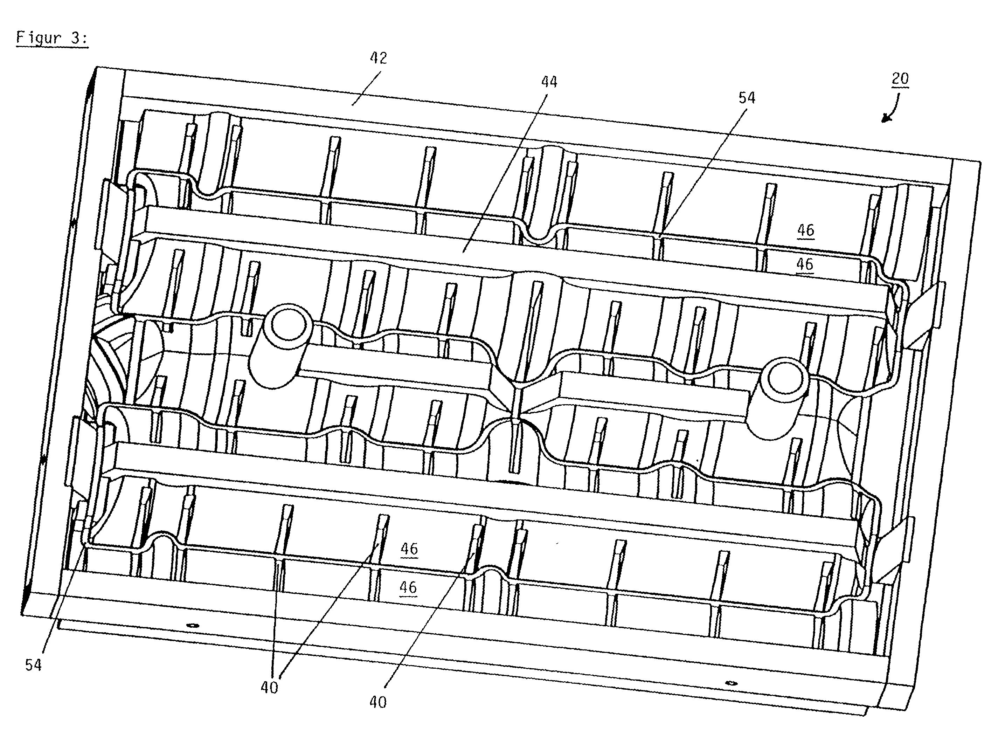

Figur 3 zeigt eine schematische Darstellung der Aufnahmevorrichtung 20. Die Aufnahmevorrichtung 20 weist mehrere Aussparungen 40 auf, durch die die Platten 36 des Stempels 18 greifen und das biegeschlaffe Montageteil auf die Montageplatte 22, 24 drücken. Die Aufnahmevorrichtung 20 besteht dabei aus mehreren, lösbar befestigten Einzelelementen, nämlich einem Rahmen 42 und mehreren Kernen 44 für die Innenkonturen. Die Einzelelemente bilden dabei die Kontur des aufzunehmenden biegeschlaffen Montageteils nach und weisen entlang dieser Kontur trichterförmige Wände 46 auf. Der durch die Wände 46 gebildete Trichter ist im Bereich der Einführöffnung für das aufzunehmende biegeschlaffe Montageteil stärker verjüngt als im Bereich einer entsprechenden, die Kontur des biegeschlaffen Montageteils nachbildenden Auslaßöffnung 54. Die biegeschlaffen Montageteile sind üblicherweise eine Kunststoffdichtung oder eine Gummidichtung.

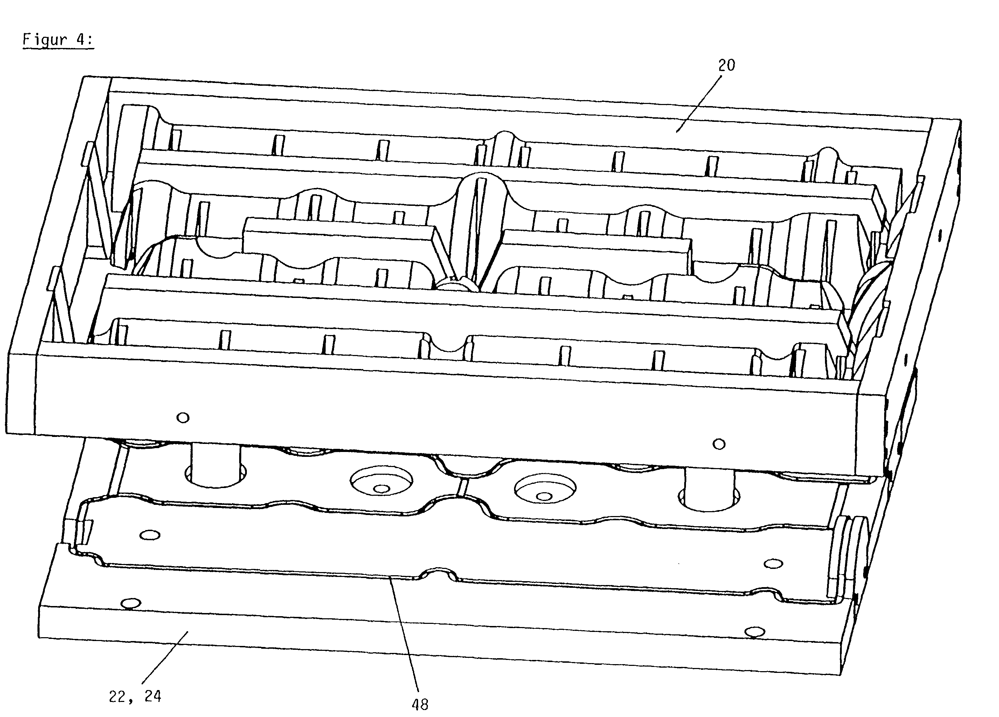

Figur 4 zeigt eine schematische Darstellung der Aufnahmevorrichtung 20 und der Montageplatte 22, 24. Man erkennt, daß die Montageplatte 22, 24 eine Nut 48 aufweist, in die das biegeschlaffe Montageteil gelegt beziehungsweise durch den Stempel 18 gedrückt wird. Die Aufnahmevorrichtung 20 dient dabei als Positionierungsmaske. Um den paßgenauen Sitz des biegeschlaffen Montageteils in der Nut 48 der Montageplatte 22, 24 zu gewährleisten, sind in der Aufnahmevorrichtung 20 und der Montageplatte 22, 24 geeignete Mittel vorgesehen, die eine exakte Positionierung dieser beiden Elemente des Montagewerkzeugs 16 gewährleisten.

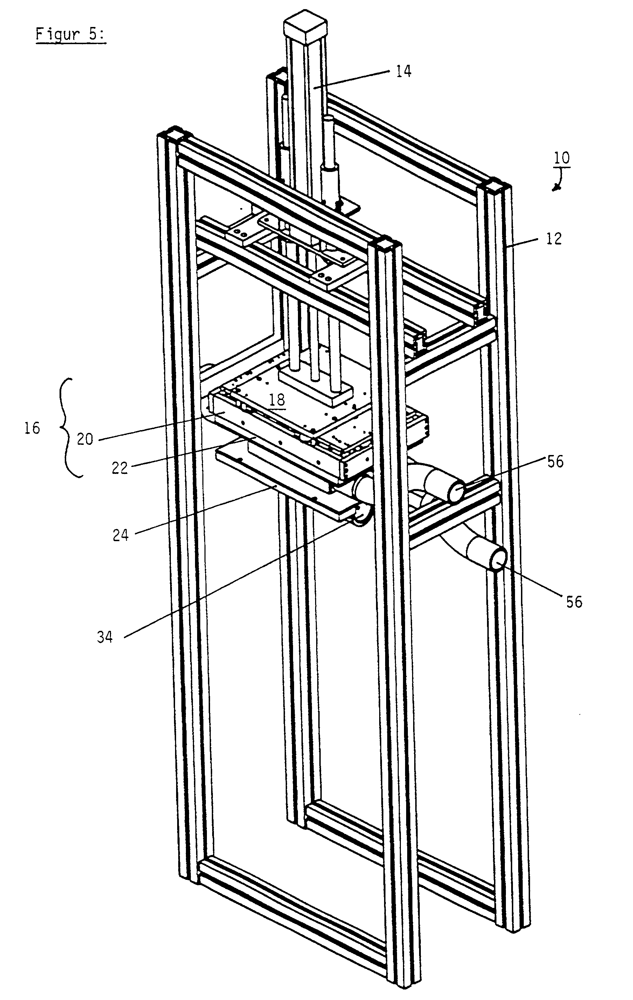

Figur 5 zeigt eine schematische Darstellung der Vorrichtung 10, ohne die untere Hubeinheit 26 und ohne das Förderband 32. Man erkennt, daß die am Rahmen 12 befestigte obere Hubeinheit 14 den Stempel 18 auf die Aufnahmevorrichtung 20 niederdrückt, so daß ein sich in der Aufnahmevorrichtung befindliches biegeschlaffes Montageteil durch diese hindurchgedrückt wird und auf der Montageplatte 22, 24 abgelegt wird. Das dargestellte Ausführungsbeispiel zeigt ein Montagewerkzeug 16 der Vorrichtung 10 mit zwei Montageplatten 22, 24, die mittels der Schwenk- und Drehvorrichtung 34 drehbar und entsprechend ausrichtbar sind. Zusätzlich sind in diesem Ausführungsbeispiel zwischen den Montageplatten 22, 24 Vakuumanschlüsse 56 angeordnet, so daß an der mit der Nut 48 versehenen Oberfläche der Montageplatte 22, 24 ein Vakuum aufgebaut wird, das das biegeschlaffe Montageteil an dieser hält. Es ist auch denkbar, daß bei einer derartigen Ausführung mit Vakuumanschlüssen 56 auf eine Nut in den Montageplatten 22, 24 verzichtet wird, so daß das biegeschlaffe Montageteil ausschließlich durch das aufgebaute Vakuum gehalten wird. Des weiteren ist es möglich, daß das Vakuum entweder zwischen der oberen und der unteren Montageplatte 22, 24 umschaltbar oder beide Montageplatten 22, 24 unabhängig voneinander ansteuerbar sind. Die nicht mit Vakuum beaufschlagte Montageplatte 22, 24 wird entweder einfach belüftet oder mit Druck beaufschlagt, so daß gegebenenfalls das Lösen des biegeschlaffen Montageteils aus der Nut oder von der Montageplatte nach dem Fügevorgang mit dem entsprechenden Werkstück 30 erleichtert wird.

Es ist ebenfalls möglich, daß, anstelle der in dem Ausführungsbeispiel dargestellten Schwenkund Drehvorrichtung 34, andere Kinematiken verwendet werden. Hierbei könnten zum Beispiel ein Rundtakttisch oder andere Zuführmechanismen verwendet werden.

Die Vorrichtung 10 ist üblicherweise computergesteuert, wobei der Zustand der Vorrichtung 10 mittels Sensoren (nicht dargestellt) überwacht wird.

## Patentansprüche

1. Vorrichtung zur Montage von biegeschlaffen Montageteilen, insbesondere zur Montage von formlabilen Dichtungen, wobei
die Vorrichtung (10) ein Montagewerkzeug (16) bestehend aus einem Stempel (18), einer Aufnahmevorrichtung (20) zur Aufnahme eines oder mehrerer biegeschlaffer Montageteile und mindestens eine Montageplatte (22, 24), aufweist,
wobei die Aufnahmevorrichtung (20) die Kontur des auf zunehmenden biegeschlaffen Montageteils nachbildet und mit einer Einführöffnung für das aufzunehmende biegeschlaffe Montageteil und einer die Kontur des biegeschlaffen Montageteils nachbildenden Auslaßöffnung (54) versehen ist und
wobei der Stempel (18) mittels einer oberen Hubeinheit (14) bewegt wird und Platten (36) und/oder Bolzen (38) aufweist, die ungefähr quer zum Verlauf der oder des biegeschlaffen Montageteils angeordnet sind und durch entsprechende Aussparungen (40) in der Aufnahmevorrichtung (20) greifen und das oder die biegeschlaffen Montageteile durch die Aufnahme vorrichtung (20) hindurch auf die Montageplatte (22, 24) drücken, wobei die Montageplatte an ein Werkstück (30) andrückbar ist.

2. Vorrichtung nach Anspruch 1,
**dadurch gekennzeichnet,**
**daß** der Stempel (18) eine lösbare Haltevorrichtung (50) für die Aufnahmevorrichtung (20) aufweist.

3. Vorrichtung nach Anspruch 2,
**dadurch gekennzeichnet,**
**daß** die Haltevorrichtung (50) aus mindestens einem Magnetgreifer und/oder mindestens einem mechanischen Halteelement besteht.

4. Vorrichtung nach einem der vorhergehenden Ansprüche,
**dadurch gekennzeichnet,**
**daß** eine oder mehrere Platten (36) und/oder Bolzen (38) des Stempels (18) mit Abstandshaltern (52) versehen sind.

5. Vorrichtung nach einem der vorhergehenden Ansprüche,
**dadurch gekennzeichnet,**
**daß** eine oder mehrere Platten (36) und/oder Bolzen (38) des Stempels (18) lösbar an diesem befestigt sind.

6. Vorrichtung nach einem der vorhergehenden Ansprüche,
**dadurch gekennzeichnet,**
**daß** die Aufnahmevorrichtung (20) einstückig ausgebildet ist.

7. Vorrichtung nach einem der Ansprüche 1 bis 5,
**dadurch gekennzeichnet,**
**daß** die Aufnahmevorrichtung (20) aus mehreren, lösbar befestigten Einzelelementen besteht.

8. Vorrichtung nach Anspruch 7,
**dadurch gekennzeichnet,**
**daß** die Einzelelemente aus mindestens einem Rahmen (42) und mindestens einem Kern (44) für die Innenkonturen der Aufnahmevorrichtung (20) bestehen.

9. Vorrichtung nach einem der vorhergehenden Ansprüche,
**dadurch gekennzeichnet,**
**daß** die Aufnahmevorrichtung (20) oder die Einzelemente die Kontur des aufzunehmenden biegeschlaffen Montageteils nachbilden und entlang der Kontur trichterförmige Wände (46) aufweisen.

10. Vorrichtung nach Anspruch 9,
**dadurch gekennzeichnet,**
**daß** der durch die Wände (46) gebildete Trichter sich im Bereich einer Einführöffnung für das aufzunehmende biegeschlaffe Montageteil stärker verjüngt als im Bereich einer entsprechenden, die Kontur des biegeschlaffen Montageteils nachbildende Auslaßöffnung (54).

11. Vorrichtung nach einem der vorhergehenden Ansprüche,
**dadurch gekennzeichnet,**
**daß** die Montageplatte (22, 24) mindestens eine Nut (48) zur Aufnahme des biegeschlaffen Montageteils aufweist.

12. Vorrichtung nach einem der vorhergehenden Ansprüche,
**dadurch gekennzeichnet,**
**daß** das biegeschlaffe Montageteil mittels eines Vakuums, das über Öffnungen in der Montageplatte (22, 24) wirkt, an dieser gehalten wird.

13. Vorrichtung nach einem der vorhergehenden Ansprüche,
**dadurch gekennzeichnet,**
**daß** die Montageplatte bzw. die Montageplatten (22, 24) einen Schwenk- und/oder Drehantrieb (34) aufweisen.

14. Vorrichtung nach einem der vorhergehenden Ansprüche,
**dadurch gekennzeichnet,**
**daß** die Vorrichtung (10) eine untere Hubeinheit (26) zum Andrücken eines Werkstücks (30) an die Montageplatte (22, 24) aufweist.

15. Vorrichtung nach einem der vorhergehenden Ansprüche,
**dadurch gekennzeichnet,**
**daß** das biegeschlaffe Montageteil mittels einer automatischen Einlegevorrichtung oder manuell in die Aufnahmevorrichtung (20) einlegbar ist.

16. Vorrichtung nach einem der vorhergehenden Ansprüche,
**dadurch gekennzeichnet,**
**daß** das biegeschlaffe Montageteil eine Kunststoffdichtung oder eine Gummidichtung ist.

17. Vorrichtung nach einem der vorhergehenden Ansprüche,
**dadurch gekennzeichnet,**
**daß** die Vorrichtung (10) computergesteuert ist.

18. Vorrichtung nach einem der vorhergehenden Ansprüche,
**dadurch gekennzeichnet,**
**daß** der Zustand der Vorrichtung (10) mittels Sensoren überwacht wird.

19. Verfahren zur Montage von biegeschlaffen Montageteilen unter der Verwendung einer Vorrichtung gemäß einem der Ansprüche 1-18, insbesondere zur Montage von formlabilen Dichtungen,
**dadurch gekennzeichnet,**
**daß** das Verfahren folgende Schritte umfaßt:
a) Manuelles oder automatisiertes Einlegen von mindestens einem biegeschlaffen Montageteil in eine Aufnahmevorrichtung (20);
b) Absenken eines Stempels (18) in Richtung der Aufnahmevorrichtung (20), wobei Teile des Stempels (18) durch Aussparungen (40) in der Aufnahmevorrichtung (20) hindurchgreifen und das biegeschlaffe Montageteil auf mindestens eine Montageplatte (22, 24) drücken;
c) Abheben des Stempels (18) und der Aufnahmevorrichtung (20) von der Montageplatte (22, 24);
d) Drehen und/oder Schwenken der Montageplatte (22, 24) mit dem aufliegenden Montageteil in Richtung eines Werkstücks (30), welches mit dem Montageteil verbunden werden soll;
e) Gegenseitiges Andrücken des Werkstücks (30) und der Montageplatte (22, 24), wodurch das Montageteil auf dem Werkstück (30) positioniert und befestigt wird;
f) Lösen von Werkstück und Montageplatte (22, 24), wobei die Montageplatte (22, 24) in eine Position zur Aufnahme weiterer Montageteile zurückgefahren wird; und
g) Wiederholen der Verfahrensschritte a) bis f).

20. Verfahren nach Anspruch 19,
**dadurch gekennzeichnet,**
**daß** das Abheben des Stempels (18) und der Aufnahmevorrichtung (20) von der Montageplatte (22, 24) stufenweise erfolgt.

21. Verfahren nach Anspruch 20,
**dadurch gekennzeichnet,**
**daß** das Abheben des Stempels (18) zeitlich nach dem Abheben der Aufnahmevorrichtung (20) erfolgt.

22. Verfahren nach einem der Ansprüche 19 bis 21,
**dadurch gekennzeichnet,**
**daß** die Aufnahmevorrichtung (20) mittels einer lös- und betätigbaren Haltevorrichtung am Stempel (18) gehalten wird.

23. Verfahren nach einem der Ansprüche 19 bis 22,
**dadurch gekennzeichnet,**
**daß** im Verfahrensschritt b) das biegeschlaffe Montageteil durch das Absenken des Stempels (18) in Richtung der Aufnahmevorrichtung (20) direkt auf das Werkstück (30) gedrückt wird.

24. Verwendung einer Vorrichtung und eines Verfahrens nach einem der vorhergehenden Ansprüche im Bereich der Motorenherstellung.

## Claims

1. Apparatus for assembling limp assembly parts, especially for assembling shape-instable sealings, wherein
the apparatus (10) has an assembling tool (16) consisting of a stamp (18), a receiving device (20) for receiving one or more limp assembly parts and at least one assembling plate (22, 24), the receiving device (20) reproducing the contour of the limp assembly part to be received and being provided with an insertion opening for the limp assembly part to be received and an outlet opening (54) reproducing the contour of the limp assembly part, and wherein the stamp (18) is moved by means of an upper lifting unit (14) and has plates (36) and/or bolts (38) disposed approximately transversely to the shape of the limp assembly part(s) and gripping through corresponding recesses (40) in the receiving device (20) and pressing the limp assembly part(s) through the receiving device (20) onto the assembling plate (22, 24), wherein the assembling plate is pressable onto a workpiece (30).

2. Apparatus according to claim 1,
**characterized in that**
the stamp (18) has a detachable retaining device (50) for the receiving device (20).

3. Apparatus according to claim 2,
**characterized in that**
the retaining device (50) consists of at least one magnetic gripper and/or at least one mechanical retaining element.

4. Apparatus according to any one of the preceding claims,
**characterized in that**
one or more plates (36) and/or bolts (38) of the stamp (18) are provided with spacers (52).

5. Apparatus according to any one of the preceding claims,
**characterized in that**
one or more plates (36) and/or bolts (38) of the stamp (18) are detachably attached thereto.

6. Apparatus according to any one of the preceding claims,
**characterized in that**
the receiving device (20) is formed as one piece.

7. Apparatus according to any one of claims 1 to 5,
**characterized in that**
the receiving device (20) consists of plural detachably attached individual elements.

8. Apparatus according to claim 7,
**characterized in that**
the individual elements consist of at least one frame (42) and at least one core (44) for the inner contours of the receiving device (20).

9. Apparatus according to any one of the preceding claims,
**characterized in that**
the receiving device (20) or the individual elements reproduce the contour of the limp assembly part to be received and have funnel-shaped walls (46) along the contour.

10. Apparatus according to claim 9,
**characterized in that**
the funnel formed by the walls (46) tapers more in the region of an insertion opening for the limp assembly part to be received than in the region of a corresponding outlet opening (54) reproducing the contour of the limp assembly part.

11. Apparatus according to any one of the preceding claims,
**characterized in that**
the assembling plate (22, 24) has at least one groove (48) for receiving the limp assembly part.

12. Apparatus according to any one of the preceding claims,
**characterized in that**
by means of vacuum acting through openings in the assembling plate (22, 24), the limp assembly part is retained thereto.

13. Apparatus according to any one of the preceding claims,
**characterized in that**
the assembling plate or the assembling plates (22, 24), respectively, has (have) a swivel and/or rotational drive (34).

14. Apparatus according to any one of the preceding claims,
**characterized in that**
the apparatus (10) has a lower lifting unit (26) for pressing a workpiece (30) onto the assembling plate (22, 24).

15. Apparatus according to any one of the preceding claims,
**characterized in that**
the limp assembly part is insertable into the receiving device (20) by means of an automatic inserting device or manually.

16. Apparatus according to any one of the preceding claims,
**characterized in that**
the limp assembly part is a plastic sealing or rubber sealing.

17. Apparatus according to any one of the preceding claims,
**characterized in that**
the apparatus (10) is computer-controlled.

18. Apparatus according to any one of the preceding claims,
**characterized in that**
the state of the apparatus (10) is monitored by means of sensors.

19. Method for assembling limp assembly parts using an apparatus according to any one of claims 1-18, especially for assembling shape-instable sealings,
**characterized in that**
the method includes the steps of:
a) manually or automatically inserting at least one limp assembly part into a receiving device (20);
b) lowering a stamp (18) toward the receiving device (20), wherein parts of the stamp (18) grip through recesses (40) in the receiving device (20) and press the limp assembly part onto at least one assembling plate (22, 24);
c) lifting the stamp (18) and the receiving device (20) off the assembling plate (22, 24);
d) rotating and/or swiveling the assembling plate (22, 24) with the resting assembly part toward a workpiece (30) to be connected to the assembly part;
e) pressing the workpiece (30) and the assembling plate (22, 24) to each other, thereby positioning the assembly part on and securing it to the workpiece (30);
f) detaching the workpiece and assembling plate (22, 24), wherein the assembling plate (22, 24) is returned to a position for receiving further assembly parts; and
g) repeating the method steps a) to f).

20. Method according to claim 19,
**characterized in that**
lifting the stamp (18) and the receiving device (20) off the assembling plate (22, 24) is effected stepwise.

21. Method according to claim 20,
**characterized in that**
lifting-off the stamp (18) is effected in time after lifting-off the receiving device (20).

22. Method according to any one of claims 19 to 21,
**characterized in that**
the receiving device (20) is retained to the stamp (18) by means of a detachable and operable retaining device.

23. Method according to any one of claims 19 to 22,
**characterized in that**
in method step b) the limp assembly part is directly pressed onto the workpiece (30) by lowering the stamp (18) toward the receiving device (20).

24. Use of an apparatus and a method according to any one of the preceding claims in the field of motor fabrication.

## Revendications

1. Dispositif de montage de pièces souples en flexion, en particulier de joints d'étanchéité de forme instable, le dispositif (10) comportant un outil de montage (16) constitué par un poussoir (18), un dispositif de réception (20) d'une ou de plusieurs pièces souples à monter et au moins une plaque de montage (22, 24), le dispositif de réception (20) épousant le contour de la pièce de montage souple à récevoir et étant pourvu d'une ouverture d'entrée de ladite pièce de montage souple à recevoir et d'une ouverture de sortie (54) épousant le contour de ladite pièce souple à monter, le poussoir (18) étant déplacé à l'aide d'un moyen de levage supérieur (14) et présentant des plaquettes (36) et/ou des chevilles (38) qui sont disposées de manière sensiblement perpendiculaire au plan de la ou des pièces souples à monter, prenant dans des encoches correspondantes (40) ménagées dans le dispositif de réception (20) en plaquant la ou les pièces souples à monter, à travers le dispositif de réception (20), contre la plaque de montage (22, 24), celle-ci étant adaptée pour être plaquée sur une pièce usinée (30).

2. Dispositif selon la revendication 1, **caractérisé en ce que** le poussoir (18) présente un dispositif amovible de maintien (50) du dispositif de réception (20).

3. Dispositif selon la revendication 2, **caractérisé en ce que** le dispositif de maintien (50) comprend au moins un organe préhenseur magnétique et/ou au moins un élément de maintien mécanique.

4. Dispositif selon l'une quelconque des revendications précédentes, **caractérisé en ce qu'**une ou plusieurs des plaquettes (36) et/ou chevilles (38) du poussoir (18) sont pourvues d'entretoises (52).

5. Dispositif selon l'une quelconque des revendications précédentes, **caractérisé en ce qu'**une ou plusieurs des plaquettes (36) et/ou chevilles (38) du poussoir (18) sont rapportées à ce dernier de manière amovible.

6. Dispositif selon l'une quelconque des revendications précédentes, **caractérisé en ce que** le dispositif de réception (20) est prévu sous forme monobloc.

7. Dispositif selon l'une des revendications 1 à 5, **caractérisé en ce que** le dispositif de réception (20) comprend une pluralité d'éléments fixés de manière amovible.

8. Dispositif selon la revendication 7, **caractérisé en ce que** les différents éléments comprennent au moins un cadre (42) et au moins un noyau (44) définissant les contours intérieurs du dispositif de réception (20).

9. Dispositif selon l'une quelconque des revendications précédentes, **caractérisé en ce que** le dispositif de réception (20) ou ses différents éléments épousent le contour de la pièce de montage souple à recevoir et présentent des parois coniques (46) selon le contour.

10. Dispositif selon la revendication 9, **caractérisé en ce que** le cône défini par les parois (46) se rétrécit davantage au droit d'une ouverture d'introduction de la pièce de montage souple à recevoir qu'au droit d'une ouverture de sortie correspondante (54) épousant le contour de ladite pièce.

11. Dispositif selon l'une quelconque des revendications précédentes, **caractérisé en ce que** la plaque de montage (22, 24) comporte au moins une rainure (48) destinée à recevoir la pièce souple à monter.

12. Dispositif selon l'une quelconque des revendications précédentes, **caractérisé en ce que** la pièce souple à monter est plaquée sur la plaque de montage (22, 24) grâce à un vide agissant par l'intermédiaire d'ouvertures ménagées dans ladite plaque.

13. Dispositif selon l'une quelconque des revendications précédentes, **caractérisé en ce que** la ou les plaques de montage (22, 24) présentent un mécanisme d'entraînement en pivotement si/ou en rotation (34).

14. Dispositif selon l'une quelconque des revendications précédentes, **caractérisé en ce que** le dispositif (10) présente une unité de levage inférieure (26) prévue pour plaquer une pièce usinée (30) contre la plaque de montage (22, 24).

15. Dispositif selon l'une quelconque des revendications précédentes, **caractérisé en ce que** la pièce souple à monter est adaptée pour être mise en place dans le dispositif de réception (20) ou à l'aide d'un dispositif de mise en place automatique ou de façon manuelle.

16. Dispositif selon l'une quelconque des revendications précédentes, **caractérisé en ce que** la pièce souple à monter est constitué par un joint d'étanchéité en matière plastique ou en caoutchouc.

17. Dispositif selon l'une quelconque des revendications précédentes, **caractérisé en ce que** le dispositif (10) est commandé par ordinateur.

18. Dispositif selon l'une quelconque des revendications précédentes, **caractérisé en ce que** l'état du dispositif (10) est surveillé au moyen de capteurs.

19. Procédé de montage de pièces souples en flexion mettant en oeuvre un dispositif selon l'une quelconque des revendications précédentes, en particulier pour le montage de joints d'étanchéité de forme instable, **caractérisé en ce que** le procédé comporte les étapes suivantes :
a) mise en place manuelle ou automatisée d'au moins une pièce souple à monter dans un dispositif de réception (20);
b) descente d'un poussoir (18) en direction du dispositif de réception (20), certaines parties du poussoir (18) passent à travers d'encoches (40) ménagées dans le dispositif de réception (20) et plaquant la pièce souple à monter sur au moins une plaque de montage (22, 24);
c) remontée du poussoir (18) et du dispositif de réception (20) depuis la plaque de montage (22, 24);
d) rotation et/ou pivotement de la plaque de montage (22, 24), la pièce à monter en appui sur celle-ci comprise, en direction d'une pièce usinée (30) devant être assemblée à la pièce à monter;
e) plaquage mutuel de la pièce usinée (30) et de la plaque de montage (22, 24) de façon à positionner et à fixer la pièce à monter sur la pièce usinée (30);
f) détachement de la pièce usinée (30) de la plaque de montage (22, 24), celle-ci étant ramenée vers une position de réception d'autres pièces à monter; et
g) répétition des étapes a) à f).

20. Procédé selon la revendication 19, **caractérisé en ce que** la remontée du poussoir (18) et du dispositif de réception (20) depuis la plaque de montage (22, 24) est progressive.

21. Procédé selon la revendication 20, **caractérisé en ce que** la remontée du poussoir (18) s'opère dans le temps après que le dispositif de réception (20) soit relevé.

22. Procédé selon l'une des revendications 19 à 21, **caractérisé en ce que** le dispositif de réception (20) est maintenu solidaire du poussoir (18) à l'aide d'un dispositif de maintien amovible et actionnable.

23. Procédé selon l'une des revendications 19 à 22, **caractérisé en ce que** lors de l'étape b), la pièce souple à monter est plaquée directement sur la pièce usinée (30) suite à la descente du poussoir (18) en direction du dispositif de réception (20).

24. Mise en oeuvre d'un dispositif et d'un procédé selon l'une quelconque des revendications précédentes dans le domaine de la fabrication de moteurs.
